Europäisches Patentamt

European Patent Office

Office européen des brevets

(19)

(11) Publication number: **0 295 098**
**A1**

(12) # EUROPEAN PATENT APPLICATION

(21) Application number: **88305274.8**

(22) Date of filing: **09.06.88**

(51) Int. Cl.⁴: **A 47 J 31/54**
**A 47 J 27/21, F 24 H 1/20**

(30) Priority: **10.06.87 GB 8713522**

(43) Date of publication of application:
**14.12.88 Bulletin 88/50**

(84) Designated Contracting States: **DE FR GB**

(71) Applicant: **MYSON GROUP PLC.**
**Ongar Essex CM5 9RE (GB)**

(72) Inventor: **Walsh, Bernard**
**10 Stevenson Drive**
**Burnley Lancashire (GB)**

**Hammond, Leslie**
**27 Newchurch in Pendle**
**Burnley Lancashire (GB)**

**Smith, Francis David Ardgour**
**22 Moorland Drive**
**Brierfield Nelson Lancashire (GB)**

(74) Representative: **Meeks, Frank Burton et al**
**BREWER & SON Quality House Quality Court Chancery**
**Lane**
**London WC2A 1HT (GB)**

(54) Hot water supply system.

(57) A hot water supply system includes a wall structure (4) resting on a stepped base (2), and a lid (6) resting on the wall structure. The base upper portion (8) forms the bottom of a heat insulated hot water tank (10). An electric heating element (22) is located in the tank (10), and a water outlet spout (24) extends from the tank (10).

The wall structure (4) defines a reception region (28) over the base lower portion (26) for a cordless electric kettle (30). An electric socket (32) receives the kettle plug pins.

In operation, water in the kettle (30) is heated by a heating element (38) in the kettle. When required, warm water is dispensed from the water tank (10) through the spout (24).

FIG. I.

EP 0 295 098 A1

## Description

## HOT WATER SUPPLY SYSTEM

The present invention relates to a system for supplying both hot water for washing purposes and also boiling water for hot drinks. The invention is particularly suitable for providing a relatively small supply of hot and boiling water as may be required for example in shops, offices, surgeries and small domestic dwellings.

A conventional method of providing hot water is to have a hot water cistern built into the water supply system of the building; which of course is a relatively complex operation. Boiling water for drinks can be provided by means of a conventional gas-ring or electric heating element positioned at a suitable location in the room. This layout tends to be space-consuming, and can also constitute a fire risk.

It is an aim of the invention to alleviate the above-mentioned disadvantages, and accordingly there is provided a hot water supply system comprising a heat-insulated water reservoir, a reception region closely adjacent to the reservoir to receive an electrically heatable water container having an electric plug, an electric heating element to heat the water in the reservoir, an electric socket arranged to receive said plug, and a conduit to dispense water from the reservoir.

Two examples of a heatable water container are an electric kettle and an electric coffee percolator. In a preferred embodiment the container is cordless, and the action of locating the container in the reception region inserts the plug in the socket.

The system may include means to deliver water directly from the reservoir to the container. This enables the water in the container to be boiled in a considerably shorter time than if the container had been filled from a cold water tap.

One embodiment of the invention will now be described by way of example with reference to the accompanying illustrative drawings in which:-

Figure I is a perspective view of a supply system of the invention with an electric kettle located in a reception region of the system,

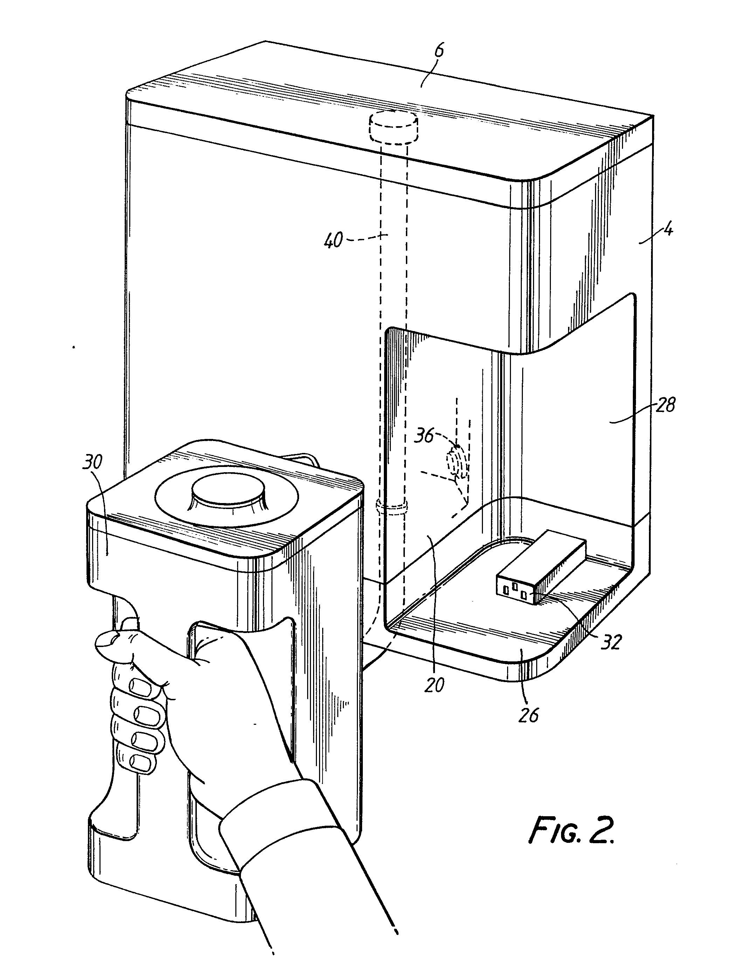

Figure 2 is a perspective view of a supply system of Figure 1 with the electric kettle withdrawn from the reception region, and

Figure 3 is a side elevation, partly in section, of part of the system of Figures 1 and 2.

Referring to the drawings, a supply system of the invention includes a stepped base 2, a wall structure 4 resting on the base 2, and a lid 6 fitting on the wall structure 4. An upper portion 8 of the base 2 constitutes the bottom of a hot water tank 10; this tank 10 having side walls 12, 14, 16 and 18. The space between the side walls 12, 14 and 16 and the corresponding part of the wall structure 4 is filled with a suitable heat insulating material 19. The space between the side wall 18 and a wall 20 of the wall structure 4 is filled with the same heat insulating material 19. The gap between the tank side walls 12, 14, 16 and 18 and the structure 4 and wall 20 is in the range of 10 to 15 mm, and the gap is filled with a foam plastics such as for example polyurethane foam. If desired, the tank can be produced as a single component with double upright walls, the gap being filled with a suitable insulating material. As shown in Figure 3, the lid 6 is of similar construction.

An electric heating element 22 extends through the upper portion 8 into the water tank 10, and a water outlet spout 24 extends from the water tank 10.

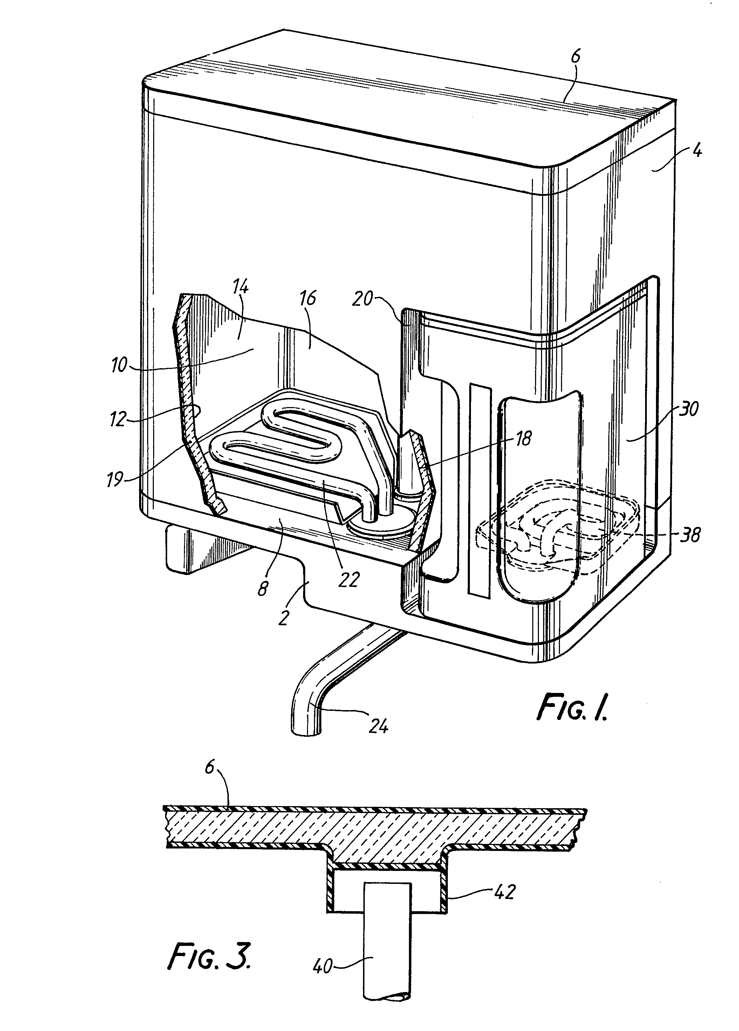

A lower portion of the base 2 forms a shelf 26; and the wall structure 4 is shaped to define a reception region 28 for a cordless electric kettle 30. An electric socket 32 is mounted on the shelf 26 so as to receive the plug pins of the kettle 30 when the kettle is located in the reception region 28 as shown in Figure 1. An overflow pipe extends from the lower portion of the tank 10 to the exterior upper surface of the lid 6 to allow escape of water and steam in the case of excessive pressure build up in the tank 10.

The tank 10 has a capacity of approximately 10 litres, and the water temperature in the tank is controlled by a thermostat 36.

In operation, the kettle 30 is located in the reception region 28, and the water in the kettle is heated by an electric heating element 38 in the kettle. When required, warm water is dispensed from the water tank 10 through the water spout 24.

Referring to Figure 3, the system is controlled by a tap at the system inlet which when turned on allows cold water to flow into the bottom of the tank 10 displacing warm water down a central water outlet 40 to the spout 24 or to a remote outlet extending from the tank 10 to a sink.

To provide a near instant water cut-off and to prevent dribbling when the tap is turned off a syphonic system is employed. To supply water the tap is turned on allowing water to rise above the top of the water outlet 40 and to flow down this outlet to the spout 24 or to the remote outlet. During this process the small quantity of air between the top of the outlet 40 and the lid 6 (a few mm) will be drawn down the outlet 40 thereby filling with water a cap 42 mounted on the underside of the lid 6.

When the tap is turned off the water level will drop to the lower level of the cap 42, and for an instant air from above the main mass of water in the tank 10 will be allowed to escape into the cap 42. This will lower the water level in the cap 42 from its top to the water level of the main mass of water leaving a difference in height between this water level and the top of the outlet 40.

In addition, warm water can be dispensed directly from the water tank 10 to the kettle 30 thereby reducing the boiling time of the kettle. This warm water can be dispensed into the kettle down the kettle spout from the upper region of the tank 10. The kettle may also be filled from the spout 24 or from a remote outlet extending from the tank 10 to a sink.

The water in the tank 10 can be maintained at any required temperature, such as for example at 60°C for washing purposes.

The system can be made of a suitable plastics material and can be moulded to have a desired aesthetically attractive appearance.

The appliance is of such size and adaptability to be used in a caravan provided that a mains electrical supply is available.

## Claims

1. A hot water supply system comprising a heat-insulated water reservoir (10), a reception region (28) closely adjacent to the reservoir to receive an electrically heatable water container (30) having an electric plug, an electric heating element (22) to heat the water in the reservoir, an electric socket (32) arranged to receive said plug and a conduit (24) to dispense water from the reservoir.

2. A system as claimed in claim 1 in which the container (30) is cordless, and the action of locating the container in the reception region (28) inserts the plug into the socket (32).

3. A system as claimed in claim 1 or 2, including means to deliver water directly from the reservoir (10) to the container (30).

4. A system as claimed in any preceding claim including an overflow pipe extending from the reservoir.

5. A system as claimed in any preceding claim including a tap at the system inlet to control the flow of water into the reservoir (10).

6. A system as claimed in any preceding claim in which the conduit (24) dispenses water from the upper region of the reservoir (10).

7. A system as claimed in claim 6 including a syphonic arrangement (40,42) located at the inlet to the conduit to reduce dripping.

8. A system as claimed in claim 7 in which the syphonic arrangement comprises an inverted cap (42) spaced from and surrounding the inlet (40) of the conduit.

9. A system as claimed in any preceding claim including a thermostat to control the water temperature in the reservoir.

10. A system as claimed in any preceding claim including a base (2), a wall structure (4) and a lid (6) made of a suitable plastics material.

11. A system as claimed in any preceding claim in which the reservoir (10) includes inner and outer walls separated by a gap filled with heat insulating foam plastics (19).

12. A system as claimed in claim 11 in which the foam plastics (19) is polyurethane foam.

0295098

FIG. I.

FIG. 3.

FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 069 113 (MAGNUSSON AB) * Whole document * | 1 | A 47 J 31/54 A 47 J 27/21 F 24 H 1/20 |
| A | --- | 3,9,11 | |
| Y | EP-A-0 178 147 (JENKINSON) * Claims 1-3; figures 1,2 * | 1 | |
| A | --- | 2 | |
| A | GB-A-2 066 433 (KOMBINAT VEB) * Whole document * --- | 1,4,5,6 ,9 | |
| A | DE-A-1 679 128 (KABELMACHER) * Whole document * --- | 1,3,4,5 ,6,10 | |
| A | GB-A-1 359 143 (BRAMAH) * Page 2, lines 24-29; page 3, lines 24-42; figure 3 * --- | 6-12 | |
| A | US-A-4 300 442 (MARTIN) * Column 3, lines 38-41; column 4, lines 12-14; column 5, lines 1-5; figures 3,4,16 * ----- | 10,11 | |

TECHNICAL FIELDS SEARCHED (Int. Cl.4)

A 47 J
F 24 H

The present search report has been drawn up for all claims

| Place of search | Date of completion of the search | Examiner |
|---|---|---|
| THE HAGUE | 16-09-1988 | SCHARTZ J. |

EPO FORM 1503 03.82 (P0401)